# EUROPEAN PATENT APPLICATION

(11) **EP 4 598 115 A1**
(43) Date of publication of application: **06.08.2025**
(21) Application number: 22959751.3
(22) Date of filing: 26.09.2022
(51) Int. Cl.: H04W 36/00, H04W 4/02

(54) **VEHICLE-MOUNTED TERMINAL DEVICE IDENTIFICATION METHOD, AND APPARATUSES**

(71) Applicant: Beijing Xiaomi Mobile Software Co., Ltd., Beijing 100085 (CN)
(72) Inventor: LI, Yanhua, Beijing 100085 (CN)
(74) Representative: Gunzelmann, Rainer
(86) International application number: PCT/CN2022/121415
(87) International publication number: WO 2024/065099

(57) **Abstract**

Disclosed in the embodiments of the present disclosure are: a vehicle-mounted terminal device identification method, and apparatuses, which can be used to the technical field of communications. The method comprises: determining first assistant information of a terminal device and second assistant information of an integrated access and backhaul node (IAB-node); and according to the first assistant information and the second assistant information, determining whether the terminal device is a vehicle-mounted terminal device. Therefore, a terminal device, an IAB-node and an IAB-donor can accurately determine whether the terminal device is a vehicle-mounted terminal device, so as to ensure that the vehicle-mounted terminal device can preferentially access the IAB-node, and perform, along with the movement of the IAB-node, reliable, accurate and efficient cell selection, cell reselection or handover, thereby improving the performance of communication systems.

## Description

### FIELD

The present disclosure relates to the field of communication technologies, and in particular to an identification method for an on-board terminal and a device.

### BACKGROUND

Integrated access and backhaul (IAB) supports millimeter-wave network devices to implement radio access and backhaul, which can effectively reduce the demand for additional fiber deployment when deploying a dense network, making wireless relaying feasible in next generation (NG) radio access networks (RANs). The relay node is referred to as an IAB-node, which supports radio access and backhaul via new radio (NR). A termination node for NR backhaul on the network side is referred to as an IAB-donor, which is a network device with IAB function. The NG RAN supports IAB by wirelessly connecting, via the IAB-node, to the IAB-donor that can serve the IAB-node.

Terminals under a mobile IAB-node may be divided into on-board terminals and surrounding terminals. During the movement of the mobile IAB-node, an IAB distributed unit (DU) of the IAB-node may need to be migrated to a new IAB-donor, that is, all UEs in a connected state that are served under the IAB-DU also need to be migrated (i.e., handed over) to the new IAB-donor or base station. Therefore, how the IAB-donor and the IAB-node distinguish the on-board UEs and the surrounding UEs is an urgent problem to be solved.

### SUMMARY

The embodiments of the present disclosure provide an identification method for an on-board terminal and a device. Whether a terminal is an on-board terminal is determined based on first auxiliary information of the terminal and second auxiliary information of an IAB-node, thereby enabling the terminal, the IAB-node and an IAB-donor to accurately determine whether the terminal is the on-board terminal. In this way, it is ensured that when the IAB-node migrates, the on-board terminal can preferentially access the IAB node, and perform reliable, accurate and efficient cell selection, cell reselection or handover as the IAB node moves, which improves the performance of the communication system.

In a first aspect, embodiments of the present disclosure provides an identification method for an on-board terminal, and the method includes: determining first auxiliary information of a terminal and second auxiliary information of an integrated access and backhaul node (IAB-node); and determining whether the terminal is the on-board terminal based on the first auxiliary information and the second auxiliary information.

In the present disclosure, whether the terminal is the on-board terminal is determined based on the first auxiliary information of the terminal and the second auxiliary information of the IAB-node, so that the terminal, the IAB-node and the IAB-donor can accurately determine whether the terminal is the on-board terminal. In this way, it is ensured that the on-board terminal can preferentially access the IAB node, and perform reliable, accurate and efficient cell selection, cell reselection or handover as the IAB node moves, which improves the performance of the communication system.

In a second aspect, embodiments of the present disclosure provide a communication device, including: a processing module, configured to determine first auxiliary information of a terminal and second auxiliary information of an integrated access and backhaul node (IAB-node); the processing module is further configured to determine whether the terminal is an on-board terminal based on the first auxiliary information and the second auxiliary information.

In a third aspect, embodiments of the present disclosure provide a communication device, which includes a processor. When the processor calls a computer program in a memory, the method described in the first aspect is performed.

In a fourth aspect, embodiments of the present disclosure provide a communication device, including a processor and a memory, where the memory is configured to store a computer program; the processor is configured to execute the computer program stored in the memory to cause the communication device to perform the method described in the first aspect.

In a fifth aspect, embodiments of the present disclosure provide a communication device, including a processor and an interface circuit, where the interface circuit is configured to receive code instructions and transmit them to the processor, and the processor is configured to execute the code instructions to cause the device to perform the method described in the first aspect.

In a sixth aspect, embodiments of the present disclosure provide a communication system, and the system includes the communication device according to the second aspect, or the system includes the communication device according to the third aspect, or the system includes the communication device according to the fourth aspect, or the system includes the communication device according to the fifth aspect.

In a seventh aspect, embodiments of the present disclosure provide a computer-readable storage medium, configured to store instructions used by the terminal described above, and when the instructions are executed, the terminal is caused to perform the method described in the first aspect.

In an eighth aspect, the present disclosure further provides a computer program product including a computer program, which, when executed on a computer, causes the computer to perform the method described in the first aspect.

In the tenth aspect, embodiments of the present disclosure provide a chip system, including at least one processor and an interface, for supporting a terminal to implement functions involved in the first aspect, such as determining or processing at least one of data or information involved in the above method. In a feasible design, the chip system further includes a memory, and the memory is configured to store a computer program and data needed by the terminal. The chip system may be formed by chips, or may include chips and other discrete devices.

In an eleventh aspect, embodiments of the present disclosure provide a computer program, which, when executed on a computer, causes the computer to perform the method described in the first aspect.

### BRIEF DESCRIPTION OF THE DRAWINGS

To better clarify technical solutions of embodiments of the present disclosure or the background, drawings used in the embodiments of the present disclosure or the background are described hereinafter.
FIG. 1 is a schematic diagram of an architecture of a communication system according to embodiments of the present disclosure.
FIG. 2 is a flow chart of an identification method for an on-board terminal according to embodiments of the present disclosure.
FIG. 3 is a flow chart of another identification method for an on-board terminal according to embodiments of the present disclosure.
FIG. 4 is a flow chart of another identification method for an on-board terminal according to embodiments of the present disclosure.
FIG. 5 is a flow chart of another identification method for an on-board terminal according to embodiments of the present disclosure.
FIG. 6 is a flow chart of another identification method for an on-board terminal according to embodiments of the present disclosure.
FIG. 7 is a flow chart of another identification method for an on-board terminal according to embodiments of the present disclosure.
FIG. 8 is a flow chart of another identification method for an on-board terminal according to embodiments of the present disclosure.
FIG. 9 is a flow chart of another identification method for an on-board terminal according to embodiments of the present disclosure.
FIG. 10 is a schematic diagram of interaction in an identification method for an on-board terminal according to embodiments of the present disclosure.
FIG. 11 is a schematic diagram of interaction in another identification method for an on-board terminal according to embodiments of the present disclosure.
FIG. 12 is a schematic diagram of interaction in another identification method for an on-board terminal according to embodiments of the present disclosure.
FIG. 13 is a schematic diagram of interaction in another identification method for an on-board terminal according to embodiments of the present disclosure.
FIG. 14 is a schematic diagram of interaction in another identification method for an on-board terminal according to embodiments of the present disclosure.
FIG. 15 is a schematic structural diagram of a communication device according to embodiments of the present disclosure.
FIG. 16 is a schematic structural diagram of another communication device according to embodiments of the present disclosure.
FIG. 17 is a schematic structural diagram of a chip according to embodiments of the present disclosure.

### DETAILED DESCRIPTION

For ease of understanding, terms involved in the present disclosure are first introduced.

### 1. IAB-node

It is a relay node of IAB, which supports radio access and backhaul via NR. A distributed unit (DU) of an upstream IAB-node or IAB-donor is connected via a terminal function subset (referred to as IAB mobile termination (MT) function in the IAB-node) of an NR Uu interface. The IAB-node provides wireless backhaul to downstream IAB-nodes and user equipments (UEs) through a network function (referred to as IAB-DU function of the IAB-node) of an NR Uu interface. That is, one IAB-done may be regarded as being formed by one IAB-MT and at least one IAB-DU.

### 2. IAB-donor

A termination node for NR backhaul on the network side is referred to as an IAB-donor, which is a network device with IAB function. The IAB-donor includes one IAB-donor central unit (CU) and one or more IAB-donor DUs.

The service of the control plane of the FI interface (F1C) between the IAB-node and the IAB-donor-CU is backhauled via the IAB-donor DU and optional IAB-nodes of intermediate hops. The service of the user plane of the F1 interface (F1U) between the IAB-node and the IAB-donor-CU is backhauled via the IAB-donor DU and optional IAB-nodes of intermediate hops.

### 3. IAB-node migration

In a scenario where IAB-node mobility is supported, e.g. a mobile on-board IAB node, as the IAB-node moves and changes, it is needed to perform an IAB-node migration process. The migration process includes two types: partial migration and full migration.

The partial migration means that only the IAB MT on the IAB-node migrates (also referred to as hands over) to a new IAB-donor, while the IAB DU on the IAB-node remains connected to the original IAB-donor, that is, the UE context on the IAB DU is stored on the original IAB-donor. The full migration means that the IAB MT on the IAB-node is migrated (also referred to as handed over) to a new IAB-donor, and the IAB DU on the IAB-node is also migrated (also referred to as handed over) to the new IAB-donor. In order to better understand the migration method in the embodiments of the present disclosure, a communication system to which the embodiments of the present disclosure are applicable is first described hereinafter.

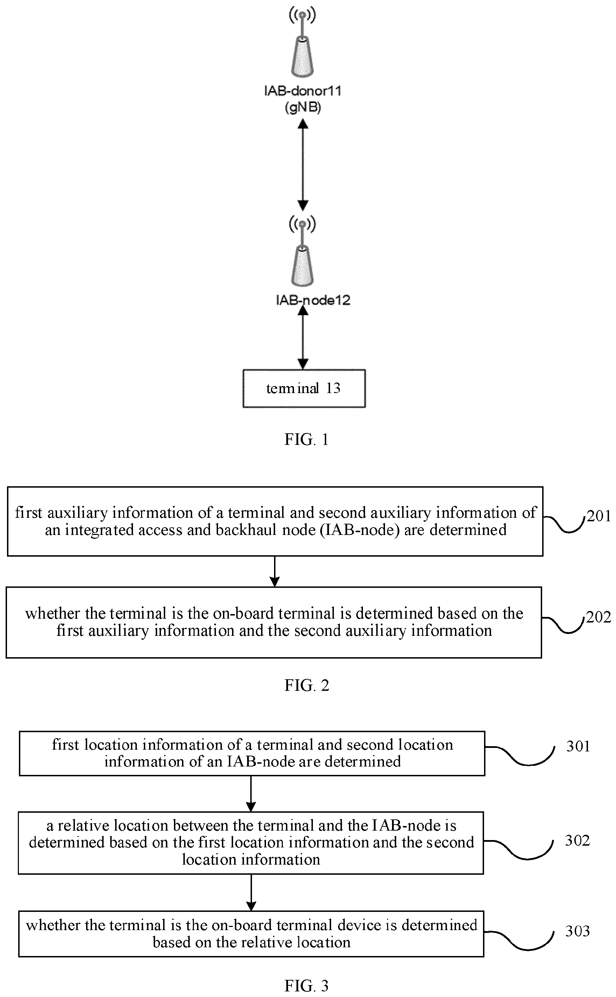

Reference is made to FIG. 1, which is a schematic diagram of an architecture of a communication system according to embodiments of the present disclosure. The communication system may include, but is not limited to, one IAB-donor, one IAB-node and one terminal. The quantity and forms of devices shown in FIG. 1 are only for examples and do not constitute a limitation on the embodiments of the present disclosure. In actual applications, two or more IAB-donors and two or more IAB-nodes may be included. In FIG. 1, a case where the communication system includes one IAB-donor 11, one IAB-node 12 and one terminal 13 is taken as an example.

It should be noted that the technical solutions of the embodiments of the present disclosure may be applied to various communication systems, such as a long term evolution (LTE) system, a 5th generation (5G) mobile communication system, a 5G new radio (NR) system, or other new mobile communication systems in the future.

The IAB-donor in the embodiments of the present disclosure is an entity with an IAB function on a network side for transmitting or receiving signals. For example, the IAB-donor may be an evolved NodeB (eNB) with an IAB function, a transmission reception point (TRP) with an IAB function, a next generation NodeB (gNB) with an IAB function in an NR system, a base station with an IAB function in other mobile communication systems in the future, or an access node in a wireless fidelity (Wi-Fi) system, etc. The specific technologies and the specific device form used by the IAB-donor are not limited in the embodiments of the present disclosure. The IAB-donor according to the embodiments of the present disclosure may include a central unit (CU) and a distributed unit (DU). The CU may also be referred to as a control unit. Protocol layers of the network device, such as a base station, may be separated by using the structure of CU-DU, where functions of some protocol layers are arranged in the CU for centralized control, and functions of some or all of the remaining protocol layers are distributed in the DU, and the CU centrally controls the DU.

The IAB-node in the embodiments of the present disclosure is a relay node that provides wireless backhaul for downstream IAB-nodes and user equipments (UEs).

The terminal 13 in the embodiments of the present disclosure is an entity on a user side for receiving or transmitting signals, such as a mobile phone. The terminal may also be referred to as a terminal device, a user equipment (UE), a mobile station (MS), a mobile terminal (MT), etc. The terminal may be a car with a communication function, a smart car, a mobile phone, a wearable device, a tablet computer (Pad), a computer with a wireless reception and transmission function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in transportation safety, a wireless terminal in a smart city, a wireless terminal in a smart home, etc. The specific technologies and the specific device form used by the terminal are not limited in the embodiments of the present disclosure.

It may be understood that the communication system described in the embodiments of the present disclosure is for more clearly illustrating the technical solutions of the embodiments of the present disclosure, and does not constitute a limitation on the technical solutions provided by the embodiments of the present disclosure. A person skilled in the art can know that, with evolution of the system architecture and emergence of new service scenarios, the technical solutions provided by the embodiments of the present disclosure are also applicable to similar technical problems.

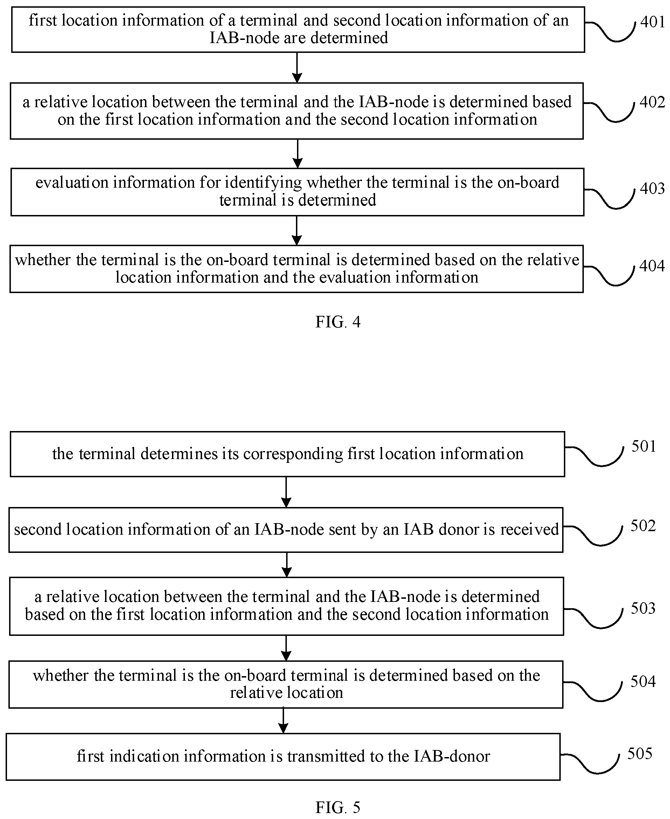

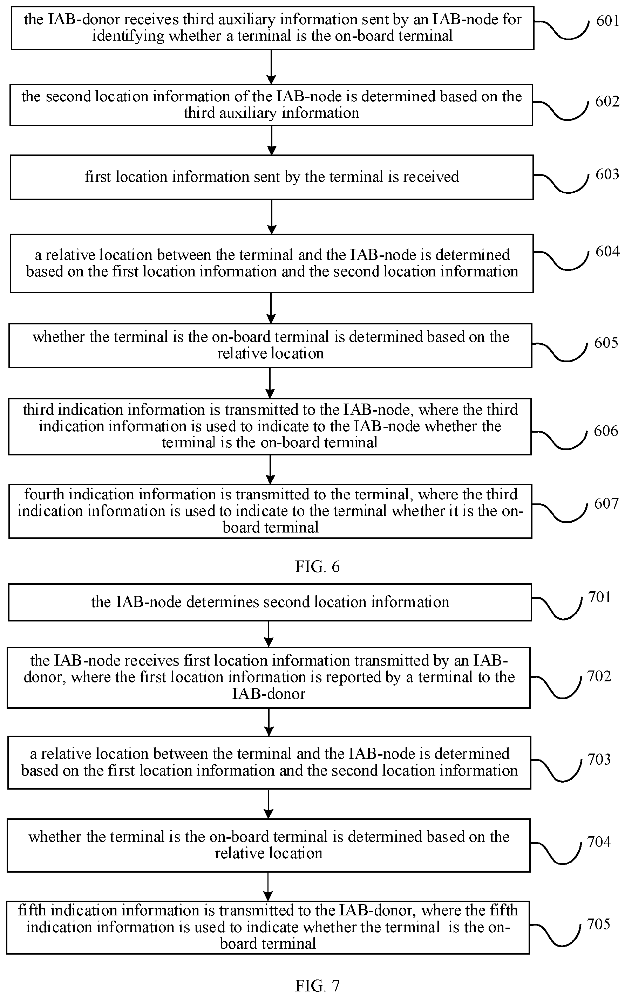

In this system, the terminal, the IAB-donor and the IAB-node may implement the method shown in any embodiment of FIGS. 2 to 4 of the present disclosure. In addition, the terminal may implement the method described in FIGS. 5, 8 and 9 of the present disclosure, the IAB-donor may implement the method shown in the embodiments of FIG. 6 of the present disclosure, and the IAB-node may implement the method shown in the embodiments of FIG.7 of the present disclosure.

It may be understood that the communication system described in the embodiments of the present disclosure is for more clearly illustrating the technical solutions of the embodiments of the present disclosure, and does not constitute a limitation on the technical solutions provided by the embodiments of the present disclosure. A person skilled in the art can know that, with evolution of the system architecture and emergence of new service scenarios, the technical solutions provided by the embodiments of the present disclosure are also applicable to similar technical problems.

Generally, during the movement of a mobile IAB-node, if an IAB-DU in the IAB-node needs to be migrated to a new IAB-donor, all UEs in a connected state that are served by the IAB-DU also need to be migrated (i.e., handed over) to the new IAB-donor or base station. Therefore, the IAB-donor and the IAB-node need to accurately determine on-board UEs and then hand over the on-board UEs to the new IAB-donor.

An identification method for an on-board terminal provided by the embodiments of the present disclosure is described in detail hereinafter in conjunction with the various flow charts.

Reference is made to FIG. 2, which is a flow chart of an identification method for an on-board terminal provided in embodiments of the present disclosure. The method provided in the embodiments may be performed by a terminal, or may be performed by an IAB-node, or may be performed by an IAB-donor. As shown in FIG. 2, the method may include but is not limited to the following steps.

Step 201: first auxiliary information of a terminal and second auxiliary information of an integrated access and backhaul node (IAB-node) are determined.

Optionally, the first auxiliary information may be first location information of the terminal. The first location information may be any information that can describe a location of the terminal. Optionally, the first location information may include at least one of the following: latitude and longitude information of the terminal, a moving speed of the terminal, a moving direction of the terminal, accuracy of location information of the terminal, etc. Correspondingly, the second auxiliary information may be second location information of the IAB-node. The second location information may include at least one of the following: latitude and longitude information of the IAB-node, track information of the IAB-node, altitude information of the IAB-node, speed information of the IAB-node, and accuracy of location information of the IAB-node.

Alternatively, the first auxiliary information may be non-access stratum (NAS) information of the terminal. The NAS information of the terminal may include application layer information, which may be any information that can reflect a service currently being performed in the terminal, such as a type of the service currently being performed, or a name of the service currently being performed, etc. Correspondingly, the second auxiliary information may be onboard state indication information of the IAB-node. The onboard state indication information is used to indicate whether the IAB-node allows the terminal to be onboarded. For example, the onboard state indication information may be an onboard enable indication (onboard enable indication), or may be an onboard disable indication (onboard disable indication).

For example, if the IAB-node is a bus, since it may need to provide card swiping services for getting on and off the bus for terminals, its corresponding onboard state indication information may be the onboard enable indication; or if the IAB-node is a private car, since it does not need to provide card swiping services for getting on and off the vehicle, its corresponding onboard state indication information may be the onboard disable indication, to ensure privacy and security of the IAB-node.

In the present disclosure, the non-access stratum includes NAS signaling, an NAS user plane, and also an application layer. The non-access stratum refers to protocol layers other than an access stratum on the terminal.

Step 202: whether the terminal is the on-board terminal is determined based on the first auxiliary information and the second auxiliary information.

Generally, since the IAB-node is in a mobile state, the terminal needs also to be in a mobile state if the terminal is the on-board terminal. Therefore, in the present disclosure, whether mobility states of the terminal and the IAB-node are the same may be determined based on the first location information of the terminal and the second location information of the IAB-node, and whether the terminal is the on-board terminal may be further determined.

For example, if the mobility state of the terminal is synchronized with that of the IAB-node, then the terminal may be determined to be the on-board terminal; otherwise, the terminal may be determined to be a non-on-board terminal or a surrounding terminal.

Alternatively, since the IAB-node in a mobile state is usually an on-board IAB-node, the services it provides are usually specific types of services, such as card swiping based on near field communication (NFC) for boarding and getting off the vehicle. Therefore, in the present disclosure, whether the terminal is the on-board terminal may be determined based on the NAS layer information of the terminal and the onboard state indication information of the IAB-node. For example, if the service currently being carried out in the terminal is an onboard service, and the onboard state indication information of the IAB-node indicates an onboard permission indication, then it may be determined that the terminal is the on-board terminal. Otherwise, it may be determined that the terminal is a non-on-board terminal.

Optionally, in the present disclosure, after the IAB-donor determines whether the terminal is the on-board terminal, the IAB-donor may transmit information indicating whether the terminal is the on-board terminal to a core network node, and the core network node may be an access management function (AMF) node or a location management function (LMF) node. If the core network node is the LMF, the IAB-donor may include the information indicating whether the terminal is the on-board terminal in a new radio positioning protocol A (NRPPa) message. The NRPPa message may be a positioning information feedback message or other NRPPa message. The LMF node may consider the information for positioning the terminal. If the core network node is the AMF, the IAB-donor may include the information indicating whether the terminal is the on-board terminal in a NGAP message. The AMF may perform mobility management on the terminal based on the information.

In the present disclosure, first, the first auxiliary information of the terminal and the second auxiliary information of the IAB-node are determined, and then, whether the terminal is the on-board terminal is determined based on the first auxiliary information and the second auxiliary information. In this way, whether the terminal is the on-board terminal is accurately determined, thereby ensuring that the on-board terminal can preferentially access the IAB node and perform reliable, accurate and efficient cell selection, cell reselection or handover as the IAB node moves, which improves the performance of the communication system.

Reference is made to FIG. 3, which is a flow chart of another identification method for an on-board terminal provided in embodiments of the present disclosure. The method provided in the embodiments may be performed by a terminal, or may be performed by an IAB-node, or may be performed by an IAB-donor. As shown in FIG. 3, the method may include but is not limited to the following steps.

Step 301: first location information of a terminal and second location information of an IAB-node are determined.

For specific implementation process of step 301, reference may be made to the detailed description of any embodiment of the present disclosure, which will not be further described herein.

Step 302: a relative location between the terminal and the IAB-node is determined based on the first location information and the second location information.

In the present disclosure, the relative location between the terminal and the IAB-node may include relative longitude and latitude, a relative moving speed, a relative moving direction, etc., between the terminal and the IAB-node.

Optionally, the first location information and the second location information may include latitude and longitude information corresponding to each of the terminal and the IAB-node within a certain time period. As a result, the relative longitude and latitude of the two may be determined based on a difference between the two pieces of longitude and latitude information for the same time. Alternatively, the first location information and the second location information may include the moving speed and moving direction of each of the terminal and the IAB-node, so the moving speed and moving direction of the terminal relative to the IAB-node may be determined. Alternatively, the first location information and the second location information may include track information of each of the terminal and the IAB-node, so the relative track between the two may be determined, etc.

Step 303: whether the terminal is the on-board terminal is determined based on the relative location.

It is understandable that if the relative location between the terminal and the IAB-node remains unchanged, e.g., the relative longitude and latitude, relative speed and relative track between the two remain unchanged, the terminal may be considered as the on-board terminal.

Optionally, after determining whether the terminal is the on-board terminal, the IAB-donor may transmit information indicating whether the terminal is the on-board terminal to a core network node. For the specific implementation method thereof, reference may be made to the detailed description of any embodiment of the present disclosure, which will not be further described herein.

In the present disclosure, the first location information of the terminal and the second location information of the IAB-node are first determined, and the relative location between the two is determined based on the first location information and the second location information, then whether the terminal is the on-board terminal is determined based on the relative location. In this way, the terminal, the IAB-node and the IAB-donor can all accurately determine whether the terminal is the on-board terminal, thereby ensuring that the on-board terminal can preferentially access the IAB node and perform reliable, accurate and efficient cell selection, cell reselection or handover as the IAB node moves, which improves the performance of the communication system.

Reference is made to FIG. 4, which is a flow chart of another identification method for an on-board terminal provided in embodiments of the present disclosure. The method provided in the embodiments may be performed by a terminal, or may be performed by an IAB-node, or may be performed by an IAB-donor. As shown in FIG. 4, the method may include but is not limited to the following steps.

Step 401: first location information of a terminal and second location information of an IAB-node are determined.

Step 402: a relative location between the terminal and the IAB-node is determined based on the first location information and the second location information.

For specific implementation process of steps 401 and 402, reference may be made to the detailed description of any embodiment of the present disclosure, which will not be further described herein.

Step 403: evaluation information for identifying whether the terminal is the on-board terminal is determined.

The evaluation information may be determined by the network device, or may be agreed upon by a protocol, or may be pre-configured in the terminal, the IAB-donor, or the IAB-node, which is not limited in the present disclosure.

Step 404: whether the terminal is the on-board terminal is determined based on the relative location information and the evaluation information.

Optionally, the evaluation information includes at least one of the following: location region range information; speed range information; location offset information for evaluation; time information for evaluation; or hysteresis information for evaluation.

The location region range information and the speed range information may be used to indicate a scenario to which the evaluation information is applicable.

Optionally, the location region range information may be a tracking area (tracking area, TA) list, a cell list, a latitude and longitude region corresponding to a geographic location, or the like. In some embodiments, the location region range information may be list information that changes with time, for example, each item in the list includes a time period and a corresponding location region range. The speed range information may be a speed range. In some embodiments, the speed range information may be list information that changes with time, for example, each item in the list includes a time period and a corresponding speed range.

That is, only when the IAB-node, or the terminal, or both the IAB-node and the terminal fall within the location region indicated by the location region range information and its speed (their speeds) is within the speed range indicated by the speed range information, can the relative location be evaluated based on the location offset information, the time information, the hysteresis information, etc.

The location offset information for evaluation is used to indicate an offset range used when evaluating the relative location, such as the offset range of longitude and latitude, the offset range of speed, etc. For example, if a difference between the longitude and latitude of the terminal and the longitude and latitude of the IAB-node is within the offset range, it may be considered that the relative longitude and latitude between the two is unchanged.

The time information for evaluation is used to indicate a time used when evaluating the relative location. Optionally, the time information for evaluation may be a time range, and then whether the terminal is the on-board terminal within the time range may be determined based on the relative location between the two within the time range. Alternatively, the time information for evaluation may be a time length, and then whether the terminal is the on-board terminal within the time indicated by the time length may be determined based on the current moment and the relative location between the two during the time length after (or before) the current moment.

The hysteresis information for evaluation is used to indicate a hysteresis interval for evaluating the relative location, so as to avoid frequent switching of the terminal between two states (i.e., onboard and offboard). For example, after it has been determined that the terminal is the on-board UE, if the difference between the longitude and latitude of the terminal and the longitude and latitude of the IAB-node exceeds the offset range plus the hysteresis range, it may be determined that the UE has been offboarded, that is, it is not an on-board UE. If the difference between the longitude and latitude of the terminal and the longitude and latitude of the IAB-node exceeds the offset range but does not exceed the offset range plus the hysteresis range, it may be determined that the UE is still the on-board UE.

In the present disclosure, after the relative location between the terminal and the IAB-node is determined, the relative location is evaluated based on the evaluation information to determine whether the terminal is the on-board terminal.

For example, if the evaluation information includes the latitude and longitude offset range for evaluation, the speed offset range and the time range for evaluation, then whether the terminal is the on-board terminal may be determined based on whether the relative longitude and latitude between the two is within the offset range and whether the relative speed between the two is within the offset range during the time range for evaluation.

Optionally, after determining whether the terminal is the on-board terminal, the IAB-donor may send information indicating whether the terminal is the on-board terminal to the core network node. For the specific implementation method thereof, reference may be made to the detailed description of any embodiment of the present disclosure, which will not be further described herein.

In the present disclosure, the first location information of the terminal and the second location information of the IAB-node are first determined, and the relative location between the two is determined based on the first location information and the second location information, then, the evaluation information is determined, and whether the terminal is the on-board terminal is determined based on the relative location and the evaluation information. In this way, the terminal, the IAB-node and the IAB-donor can all accurately determine whether the terminal is the on-board terminal, thereby ensuring that the on-board terminal can preferentially access the IAB node and perform reliable, accurate and efficient cell selection, cell reselection or handover as the IAB node moves, which improves the performance of the communication system.

Reference is made to FIG. 5, which is a flow chart of another identification method for an on-board terminal provided in embodiments of the present disclosure. The method provided in the embodiments may be performed by a terminal. As shown in FIG. 5, the method may include but is not limited to the following steps.

Step 501: the terminal determines its corresponding first location information.

Optionally, the terminal may utilize its own components to determine its corresponding first location information. For example, the global positioning system (GPS) is used to determine its corresponding longitude and latitude information, its corresponding moving speed information is determined based on its own acceleration sensor, its corresponding moving direction is determined based on its own direction sensor, etc., which is not limited in the present disclosure.

Step 502: second location information of an IAB-node sent by an IAB donor is received.

Optionally, the terminal may receive, via a radio resource control (RRC) message, the second location information sent by the IAB-donor. The RRC message may be a system message, or an RRC reconfiguration message, or an RRC release message, etc., which is not limited in the present disclosure.

It should be noted that the steps 501 and 502 may be performed simultaneously, or step 502 may be performed first and then step 501 is performed, which is not limited in the present disclosure.

Step 503: a relative location between the terminal and the IAB-node is determined based on the first location information and the second location information.

Step 504: whether the terminal is the on-board terminal is determined based on the relative location.

For specific implementation process of step 503 and step 504, reference may be made to the detailed description of any embodiment of the present disclosure, which will not be further described herein.

Optionally, the terminal may further receive evaluation information sent by the IAB-donor, and then evaluate the relative location based on the evaluation information, to determine whether the terminal is the on-board terminal.

Optionally, the terminal may receive, via the same RRC message, the evaluation information and the second location information sent by the IAB-donor; or may receive simultaneously or successively, via different RRC messages, the evaluation information and the second location information sent by the IAB-donor, which is not limited in the present disclosure.

Step 505: first indication information is transmitted to the IAB-donor.

The first indication information is used to indicate whether the terminal is the on-board terminal.

Optionally, the terminal may send the first indication information to the IAB-donor via an RRC message. For example, the RRC message may be a measurement report message, a UE information report message, or the like.

Optionally, the terminal may further send second indication information to the IAB-node, so as to indicate to the IAB-node whether the terminal is the on-board terminal based on the second indication information.

Optionally, the terminal may send the second indication information to the IAB-node via L1/L2 signaling, for example, the L1/L2 signaling is physical layer signaling, MAC CE, etc.

Optionally, if the terminal is the on-board terminal, the first indication information and the second indication information each may be "on-board" indication; or if the terminal is not an on-board terminal, the first indication information and the second indication information each may be "off-board" indication, which are not limited in the present disclosure.

Optionally, in the present disclosure, the terminal may not send the second indication information to the IAB-node, and the IAB-donor may send indication information, such as an onboard indication or an offboard indication, to the IAB-node after receiving the first indication information, to inform the IAB-node whether the terminal is the on-board terminal via the IAB-donor.

In the present disclosure, the on-board terminal needs to be handed over to a new IAB-donor as the IAB-node performs handover. However, the process or method of being handed over to the new IAB-donor for the on-board terminal is different from that for a surrounding terminal. Therefore, in the present disclosure, after determining whether the terminal is the on-board terminal, the terminal may send the first indication information to the IAB-donor, to indicate to the IAB-donor whether it is the on-board terminal, and then the IAB-donor may send the second indication information to the IAB-node, to indicate whether the terminal is the on-board terminal.

Optionally, the IAB-donor may send the second indication information to the IAB-node via an F1AP message, where the F1AP message may be a UE context establishment request message, a UE context modification request message or other F1AP message, which is not limited in the present disclosure. In the present disclosure, after the terminal determines whether it is the on-board terminal, if needed, it may perform corresponding operations based on whether it is the on-board terminal.

Afterwards, the IAB-node may save the second indication information in the UE context. After the IAB-donor and the IAB-node respectively save the indication information indicating whether the terminal is the on-board terminal, the IAB-donor or the IAB-node may perform relevant operations on the on-board UE based on the saved on-board or off-board indication in a case of performing the relevant operations for the on-board UE (such as group handover and/or RACH-less).

In some embodiments, if the terminal is in an RRC idle state (ILDE) or an RRC inactive state (INACTIVE), or enters the RRC_ILDE or RRC_INACTIVE state after receiving, via an RRC release message, the second location information sent by the IAB-donor, then, cell selection and cell reselection process for the on-board UE may be performed in a case that the terminal determines that it is the on-board terminal. In some other embodiments, if the UE is in the RRC connected (CONNECTED) state, or the UE enters the RRC_CONNECTED state from the RRC_ILDE or RRC _INACTIVE state, then the UE may send an onboard indication or an offboard indication to the IAB-donor via an RRC message after determining whether it is the on-board terminal. The RRC message may be an RRC establishment request message, an RRC resume request message, an RRC establishment complete message, an RRC resume complete message, a measurement report and/or other RRC messages.

Optionally, after determining whether the terminal is the on-board terminal, the IAB-donor may send information indicating whether the terminal is the on-board terminal to the core network node. For the specific implementation method thereof, reference may be to the detailed description of any embodiment of the present disclosure, which will not be further described herein.

In the present disclosure, the terminal first determines its own first location information; after receiving the second location information of the IAB-node sent by the IAB-donor, the terminal may determine the relative location between the two based on the first location information and the second location information; then the terminal may determine whether the terminal is the on-board terminal for the IAB-node based on the relative location; and the terminal may send the first indication information to the IAB-donor to indicate whether it is the on-board terminal. Therefore, the terminal can determine whether it is the on-board terminal based on its relative location with respect to the IAB-node, and then indicate the determination result to the IAB-donor. In this way, the terminal, IAB-node and IAB-donor can all accurately determine whether the terminal is the on-board terminal, thereby ensuring that the on-board terminal can preferentially access to the IAB node and perform reliable, accurate and efficient cell selection, cell reselection or handover as the IAB node moves, which improves the performance of the communication system.

Reference is made to FIG. 6, which is a flow chart of another identification method for an on-board terminal provided in embodiments of the present disclosure, and the method is performed by an IAB-donor. As shown in FIG. 6, the method may include but is not limited to the following steps.

Step 601: the IAB-donor receives third auxiliary information sent by an IAB-node for identifying whether a terminal is the on-board terminal.

Optionally, the third auxiliary information includes at least one of the following: an onboard enable indication (onboarding enable indication); an onboard disable indication (onboarding disable indication); or second location information of the IAB-node. For the meaning and implementation form of each of the above various pieces of information, reference may be made to the detailed description of any embodiment of the present disclosure, which will not be further described herein.

In the present disclosure, the IAB-donor may receive the third auxiliary information sent by the IAB-node, to determine, based on the third auxiliary information, whether the IAB-node needs to determine whether the terminal is the on-board terminal of the IAB-node.

Step 602: the second location information of the IAB-node is determined based on the third auxiliary information.

Step 603: first location information sent by the terminal is received.

Step 603 may be performed simultaneously with steps 601 and 602, or step 603 may be performed first and then step 601 and step 602 are performed, which is not limited in the present disclosure.

Step 604: a relative location between the terminal and the IAB-node is determined based on the first location information and the second location information.

Step 605: whether the terminal is the on-board terminal is determined based on the relative location.

It should be noted that the IAB-donor needs to determine the relative location between the IAB-node and the terminal and then determine whether the terminal is the on-board terminal, only when it receives the onboard enable indication of the IAB-node in the third auxiliary information.

Optionally, the IAB-donor may also receive evaluation information sent by the IAB-node, and evaluate the relative location between the terminal and the IAB-node based on the evaluation information, to determine whether the terminal is the on-board terminal. For the specific content and implementation form of the evaluation information, reference may be made to the detailed description of any embodiment of the present disclosure, which will not be further described herein.

Optionally, the IAB-donor may receive, via one message, the evaluation information and the third auxiliary information sent by the IAB-node, or may first receive the evaluation information sent by the IAB-node and then receive the third auxiliary information; or may simultaneously receive, via different messages, the third auxiliary information and the evaluation information, which is not limited in the present disclosure.

Step 606: third indication information is transmitted to the IAB-node, where the third indication information is used to indicate to the IAB-node whether the terminal is the on-board terminal.

Optionally, the IAB-donor may send an onboard indication to the IAB-node via an F1AP message to indicate that the terminal is the on-board terminal; or send an offboard indication to indicate that the terminal is not an on-board terminal. The F1AP message may be a UE context establishment request message, a UE context modification request message or other F1AP messages.

In addition, the IAB-donor and the IAB-node may save information indicating whether the terminal is the on-board terminal. The IAB-donor or the IAB-node may perform relevant operations on the on-board UE based on the saved on-board or off-board indication in a case of performing the relevant operations for the on-board UE (such as group handover and/or RACH-less).

Step 607: fourth indication information is transmitted to the terminal, where the fourth indication information is used to indicate to the terminal whether it is the on-board terminal.

Optionally, the IAB-donor may send the fourth indication information to the terminal via an RRC message. The RRC message may be an RRC reconfiguration message, an RRC release message or other RRC messages, etc., which is not limited in the present disclosure.

After receiving the fourth indication information, the UE may save the fourth indication information and perform relevant operations for the on-board UE (e.g., cell selection and reselection, handover, etc. for the on-board UE) based on the fourth indication information.

Step 607 and step 606 may be performed simultaneously, or step 607 may be performed first and then step 606 is performed, which is not limited in the present disclosure.

Optionally, after determining whether the terminal is the on-board terminal, the IAB-donor may send information indicating whether the terminal is the on-board terminal to the core network node. For the specific implementation method thereof, reference may be made to the detailed description of any embodiment of the present disclosure, which will not be further described herein.

In the present disclosure, after receiving the third auxiliary information sent by the IAB-node for identifying whether the terminal is the on-board terminal, the IAB-donor first determines the second location information of the IAB-node based on the third auxiliary information; after receiving the first location information sent by the terminal, the IAB-donor determines the relative location between the two based on the first location information and the second location information; then the IAB-donor determines whether the terminal is the on-board UE based on the relative location, and sends indication information to the IAB-node and the UE respectively to synchronize with the IAB-node and the UE to inform them whether the UE is the on-board UE. In this way, the terminal, the IAB-node and the IAB-donor can all accurately determine whether the terminal is the on-board terminal, thereby ensuring that the on-board terminal can preferentially access the IAB node and perform reliable, accurate and efficient cell selection, cell reselection or handover as the IAB node moves, which improves the performance of the communication system.

Reference is made to FIG. 7, which is a flow chart of another identification method for an on-board terminal provided in embodiments of the present disclosure, and the method is performed by an IAB-node. As shown in FIG. 7, the method may include but is not limited to the following steps.

Step 701: the IAB-node determines second location information.

Optionally, the IAB-node may determine its corresponding second location information based on its own positioning device. For the various pieces of information and meanings that may be included in the second location information, reference may be made to the detailed description of any embodiment of the present disclosure, which will not be further described herein.

Step 702: the IAB-node receives first location information transmitted by an IAB-donor, where the first location information is reported by a terminal to the IAB-donor.

Optionally, the IAB-node may receive, via an FIAP message, the first location information sent by the IAB-donor. The F1AP message may be a UE context establishment request message, a UE context modification request message, a UE location information message or other F1AP message, which is not limited in the present disclosure.

Steps 702 and 701 may be performed simultaneously, or step 702 may be performed first and then step 701 is performed, which is not limited in the present disclosure.

Step 703: a relative location between the terminal and the IAB-node is determined based on the first location information and the second location information.

Step 704: whether the terminal is the on-board terminal is determined based on the relative location.

For the specific implementation of steps 703 and 704, reference may be made to the detailed description of any embodiment of the present disclosure, which will not be further described herein.

Optionally, the IAB-node may evaluate the relative location based on evaluation information to determine whether the terminal is the on-board terminal. The evaluation information may be preset in the IAB-node, or may be sent to the IAB-node by the IAB-donor, or may be determined by the IAB-node according to the agreement, which is not limited in the present disclosure.

Step 705: fifth indication information is transmitted to the IAB-donor, where the fifth indication information is used to indicate whether the terminal is the on-board terminal.

Optionally, after determining whether the terminal is the on-board terminal, the IAB-node may also send sixth indication information to the terminal to indicate the determination result to the terminal.

Optionally, the IAB-node may send the sixth indication information to the terminal via L1/L2 signaling, for example, the L1/L2 signaling is physical layer signaling, MAC CE, etc.

Optionally, after determining whether the terminal is the on-board UE, the IAB-node may only send the fifth indication information to the IAB-donor, and then the IAB-donor sends an onboard indication or an offboard indication to the terminal. In the present disclosure, when the IAB-node determines that the terminal is the on-board UE, it may send an onboard indication to the IAB-donor, and then the IAB-donor may also send the onboard indication to the terminal. Alternatively, in a case that the IAB-node determines that the terminal is a non-on-board UE, it may send an offboard indication to the IAB-donor, and then the IAB-donor may also send the offboard indication to the terminal.

In some embodiments, the IAB-node may send the onboard indication or the offboard indication to the IAB-donor via an F1AP message, where the F1AP message may be a UE context establishment response message, a UE context modification response message, a UE context modification request message, or other F1AP message.

The IAB-donor and IAB-node may save the onboard indication or the offboard indication. In a case of performing relevant operations for the on-board UE (such as group handover and/or RACH-less), the IAB-donor or the IAB-node may perform the relevant operations on the on-board UE based on the saved on-board or off-board indication.

In addition, the IAB-donor may send the on-board or off-board indication to the UE via an RRC message, and the UE may save the indication information and perform relevant operations for the on-board UE (for example, cell selection and reselection, handover, etc., for the on-board UE) based on the indication information.

In the present disclosure, the IAB-node first determines its own second location information; after receiving the first location information of the UE sent by the IAB-donor, it may determine the relative location between the UE and the IAB-node based on the first location information and the second location information; and the IAB-node determines whether the UE is the on-board UE based on the relative location, and indicates to the IAB-donor whether the UE is the on-board UE. In this way, the IAB-donor, the IAB-node and the UE can all accurately determine whether the UE is the on-board UE, thereby ensuring that the on-board terminal can preferentially access the IAB node and perform reliable, accurate and efficient cell selection, cell reselection or handover as the IAB node moves, which improves the performance of the communication system.

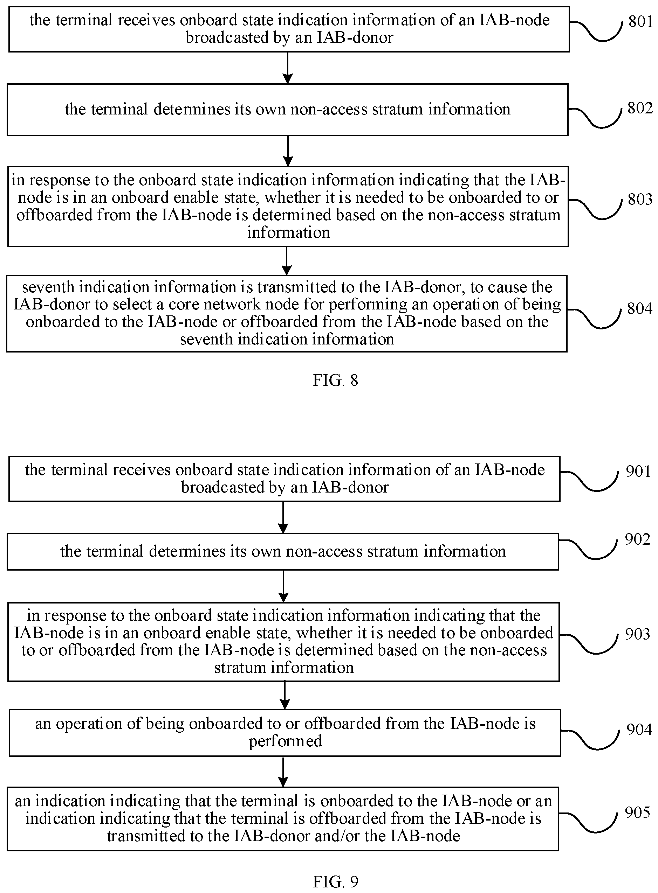

Reference is made to FIG. 8, which is a flow chart of another identification method for an on-board terminal provided in embodiments of the present disclosure, and the method is performed by a terminal. As shown in FIG. 8, the method may include but is not limited to the following steps.

Step 801: the terminal receives onboard state indication information of an IAB-node broadcasted by an IAB-donor.

The onboard state indication information may be an onboard enable indication, or may be an onboard disable indication.

Optionally, the onboard state indication information may be sent by the IAB-node to the IAB-donor, or may be determined by the IAB-donor based on the protocol agreement and a type of the IAB-node, which is not limited in the present disclosure.

Optionally, the onboard state indication information may be sent by the IAB-node to the IAB-donor via an RRC message or an F1AP message.

In the present disclosure, the IAB-node sending information to the IAB-donor via an RRC message specifically means that an IAB-MT on the IAB-node sends the information to the IAB-donor via the RRC message; and the IAB-node sending information to the IAB-donor via an F1AP message specifically means that an IAB-DU on the IAB-node sends the information to the IAB-donor via the F1AP message.

Step 802: the terminal determines its own non-access stratum information.

Steps 801 and 802 may be performed simultaneously, or step 802 may be performed first and then step 801 is performed, which is not limited in the present disclosure.

Step 803: in response to the onboard state indication information indicating that the IAB-node is in an onboard enable state, whether it is needed to be onboarded to or offboarded from the IAB-node is determined based on the non-access stratum information.

In the present disclosure, the non-access stratum includes NAS signaling, an NAS user plane, and also includes an application layer. The non-access stratum refers to other protocol layers on the terminal except the access stratum.

In the present disclosure, if the IAB-node is in the onboard enable state, the terminal may determine its own service state based on the non-access stratum information, and then determine whether it is needed to be onboarded to the IAB-node (onboard IAB-node) or offboarded from the IAB-node (offboard IAB-node).

Step 804: seventh indication information is transmitted to the IAB-donor, to cause the IAB-donor to select a core network node for performing an operation of being onboarded to the IAB-node or offboarded from the IAB-node based on the seventh indication information.

The seventh indication information is used to indicate whether the terminal needs to be onboarded to the IAB-node.

Optionally, the terminal may carry the seventh indication information in an RRC establishment complete message. The IAB-donor may then select a suitable core network node for the UE to perform a subsequent onboarding process or offboarding process.

Optionally, after performing the subsequent onboarding process or offboarding process, the terminal sends first indication to the IAB-donor. The description of the first indication is consistent with the content in step 505, which will not be further described herein.

In the present disclosure, the core network node selected by the IAB-donor may be an Access Management Function (Access Management Function, AMF) network element.

In addition, the onboard indication or the offboard indication that is broadcast by the IAB-donor and then received by the terminal may be sent by the AMF to the IAB-donor via an NGAP message. The NGAP message may be an initial context establishment request message, a UE context modification request message or other NGAP messages.

In the present disclosure, after the IAB-donor selects the core network node, the core network node may perform the operation of being onboarded to the IAB-node or offboarded from the IAB-node based on the indication. Afterwards, the core network node may send the result of being onboarded to or offboarded from the IAB-donor, and the IAB-donor may then send an onboard indication or an offboard indication to the IAB-node.

Both the IAB-donor and the IAB-node may save the onboard indication or the offboard indication. In a case of performing relevant operations for the on-board UE (such as group handover and/or RACH-less), the IAB-donor or the IAB-node may perform the relevant operations for the on-board UE based on the saved on-board or off-board indication.

It should be noted that, in the present disclosure, after the terminal determines whether it needs to be onboarded to or offboarded from the IAB-node, the operation of being onboarded to or offboarded from the IAB-node is performed by the core network node. Therefore, the terminal needs to access the core network before sending an indication indicating that it needs to be onboarded to or offboarded from the IAB-node to the IAB-donor. That is, if there is no RRC connection between the terminal and the core network at this time, then an RRC establishment request needs to be initiated first to establish an RRC connection with the core network.

Optionally, after determining whether the terminal is the on-board terminal, the IAB-donor may send information indicating whether the terminal is the on-board terminal to a core network node, such as an LMF. For the specific implementation method thereof, reference may be made to the detailed description of any embodiment of the present disclosure, which will not be further described herein.

In the present disclosure, after receiving the indication information indicating the onboard state of the IAB-node sent by the IAB-donor, the terminal first determines its own non-access stratum information; after determining that the IAB-node is in the onboard enable state, the terminal determines whether it needs to be onboarded to or offboarded from the IAB-node based on the non-access stratum information, and then sends the determination result to the IAB-donor, to cause the IAB-donor to select a suitable core network node for performing the operation of being onboarded to the IAB-node or offboarded from the IAB-node. In this way, the IAB-donor, the IAB-node and the UE can all accurately know whether the UE is the on-board UE, thereby ensuring that the on-board terminal can preferentially access the IAB node and perform reliable, accurate and efficient cell selection, cell reselection or handover as the IAB node moves, which improves the performance of the communication system.

Reference is made to FIG. 9, which is a flow chart of another identification method for an on-board terminal provided in embodiments of the present disclosure, and the method is performed by a terminal. As shown in FIG. 9, the method may include but is not limited to the following steps.

Step 901: the terminal receives onboard state indication information of an IAB-node broadcasted by an IAB-donor.

Step 902: the terminal determines its own non-access stratum information.

Step 903: in response to the onboard state indication information indicating that the IAB-node is in an onboard enable state, whether it is needed to be onboarded to or offboarded from the IAB-node is determined based on the non-access stratum information.

For specific implementation forms of steps 901 to 903, reference may be made to the detailed description of any embodiment of the present disclosure, which will not be further described herein.

Step 904: an operation of being onboarded to or offboarded from the IAB-node is performed.

In the present disclosure, after determining whether it needs to be onboarded to the IAB-node, the terminal may perform the operation of being onboarded to or offboarded from the IAB-node by itself.

Step 905: an indication indicating that the terminal is onboarded to the IAB-node or an indication indicating that the terminal is offboarded from the IAB-node is transmitted to the IAB-donor and/or the IAB-node.

Optionally, after the terminal is onboarded to or offboarded from the IAB-node, the terminal may send the indication indicating that the terminal is onboarded to the IAB-node or the indication indicating that the terminal is offboarded from the IAB-node to the IAB-donor via an RRC message, and then the IAB-donor sends an on-board indication or an off-board indication to the IAB-node.

Alternatively, the terminal may send only the indication indicating onboarding or the indication indicating offboarding to the IAB-node via L1/L2 signaling, and then the IAB-node sends the onboard indication or the offboard indication to the IAB-donor.

Alternatively, after the terminal is onboarded to or offboarded from the IAB-node, the terminal may send the indication indicating onboarding or the indication indicating offboarding to the IAB-donor via an RRC message, and also send the indication indicating onboarding or the indication indicating offboarding to the IAB-node via L1/L2 signaling, etc., which is not limited in the present disclosure. For the specific implementation forms of the RRC message and the L1/L2 signaling, reference may be made to the detailed description of any embodiment of the present disclosure, which will not be further described herein.

Optionally, after determining whether the terminal is the on-board terminal, the IAB-donor may send information indicating whether the terminal is the on-board terminal to the core network node. For the specific implementation method thereof, reference may be made to the detailed description of any embodiment of the present disclosure, which will not be further described herein.

In the present disclosure, after receiving the indication information indicating the onboard state of the IAB-node sent by the IAB-donor, the terminal first determines its own non-access stratum information; after determining that the IAB-node is in the onboard enable state, the terminal determines whether it needs to be onboarded to or offboarded from the IAB-node based on the non-access stratum information, then performs the operation of being onboarded to or offboarded from the IAB-node, and sends the execution result to the IAB-donor and/or the IAB-node. In this way, the IAB-donor, the IAB-node and the UE can all accurately know whether the UE is the on-board UE, thereby ensuring that the on-board terminal can preferentially access the IAB node and perform reliable, accurate and efficient cell selection, cell reselection or handover as the IAB node moves, which improves the performance of the communication system.

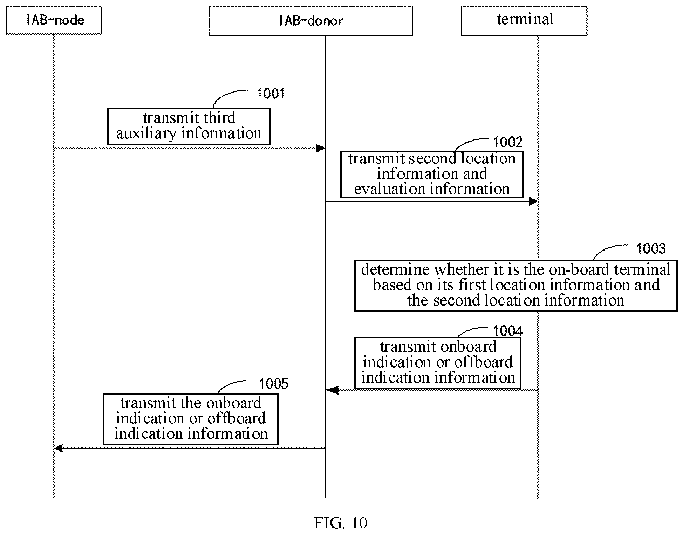

Reference is made to FIG. 10, which is a schematic diagram of interaction in an identification method for an on-board terminal provided in embodiments of the present disclosure. As shown in FIG. 10, the method may include but is not limited to the following steps.

Step 1001: an IAB-node transmits third auxiliary information to an IAB-donor.

Step 1002: the IAB-donor transmits second location information and evaluation information to a terminal.

Step 1003: the terminal determines whether it is the on-board terminal based on its first location information and the second location information.

Step 1004: the terminal transmits onboard indication or offboard indication information to the IAB-donor.

Step 1005: the IAB-donor transmits the onboard indication or the offboard indication information to the IAB-node.

For specific implementation of each of the above steps, reference may be made to the detailed description of any embodiment of the present disclosure, which will not be further described herein.

It should be noted that, in the present disclosure, the terminal may also send the onboard indication or the offboard indication information to the IAB-node.

Optionally, after determining whether the terminal is the on-board terminal, the IAB-donor may send information indicating whether the terminal is the on-board terminal to the core network node. For the specific implementation method thereof, reference may be made to the detailed description of any embodiment of the present disclosure, which will not be further described herein.

In the present disclosure, the IAB-node first sends its current onboard state and location information to the IAB-donor, and then the IAB-donor indicates this information to the terminal, so that the terminal can determine its relative location with respect to the IAB-node based on the pieces of location information of the two, then determine whether it is the on-board terminal based on the relative location between the two, and synchronize with the IAB-donor and the IAB-node to indicate the determination result to them. In this way, the IAB-donor, the IAB-node and the UE can all accurately know whether the UE is the on-board UE, thereby ensuring that the on-board terminal can preferentially access the IAB node and perform reliable, accurate and efficient cell selection, cell reselection or handover as the IAB node moves, which improves the performance of the communication system.

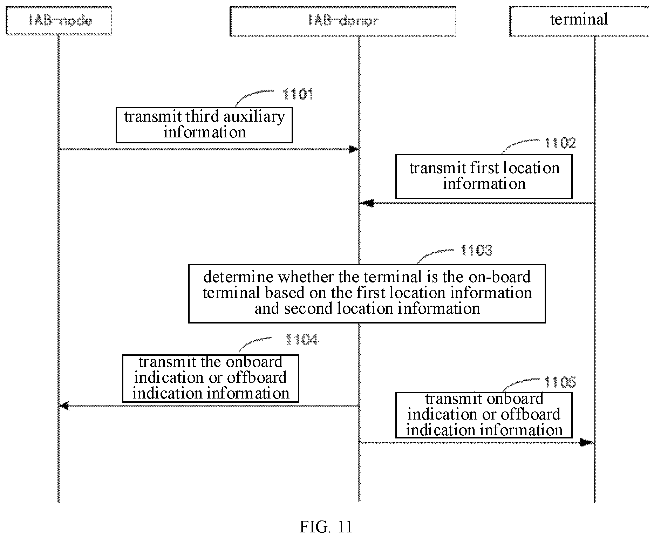

Reference is made to FIG. 11, which is a schematic diagram of interaction in another identification method for an on-board terminal provided in embodiments of the present disclosure. As shown in FIG. 11, the method may include but is not limited to the following steps.

Step 1101: an IAB-node transmits third auxiliary information to an IAB-donor.

Step 1102: a terminal transmits first location information to the IAB-donor.

Step 1103: the IAB-donor determines whether the terminal is the on-board terminal based on the first location information and second location information.

Step 1104: the IAB-donor transmits onboard indication or offboard indication information to the IAB-node.

Step 1105: the IAB-donor transmits the onboard indication or the offboard indication information to the terminal

For specific implementation of each of the above steps, reference may be made to the detailed description of any embodiment of the present disclosure, which will not be further described herein.

Optionally, after determining whether the terminal is the on-board terminal, the IAB-donor may send information indicating whether the terminal is the on-board terminal to a core network node. For specific implementation method thereof, reference may be made to the detailed description of any embodiment of the present disclosure, which will not be further described herein.

In the present disclosure, the IAB-node first sends its current onboard state and location information to the IAB-donor; after receiving the first location information sent by the terminal, the IAB-donor may determine the relative location between the terminal and the IAB-node based on the pieces of location information of the two, then determine whether the terminal is the on-board terminal based on the relative location between the two, and synchronize with the IAB-node and the terminal to indicate the determination result to them. In this way, the IAB-donor, the IAB-node and the UE can all accurately know whether the UE is the on-board UE, thereby ensuring that the on-board terminal can preferentially access the IAB node and perform reliable, accurate and efficient cell selection, cell reselection or handover as the IAB node moves, which improves the performance of the communication system.

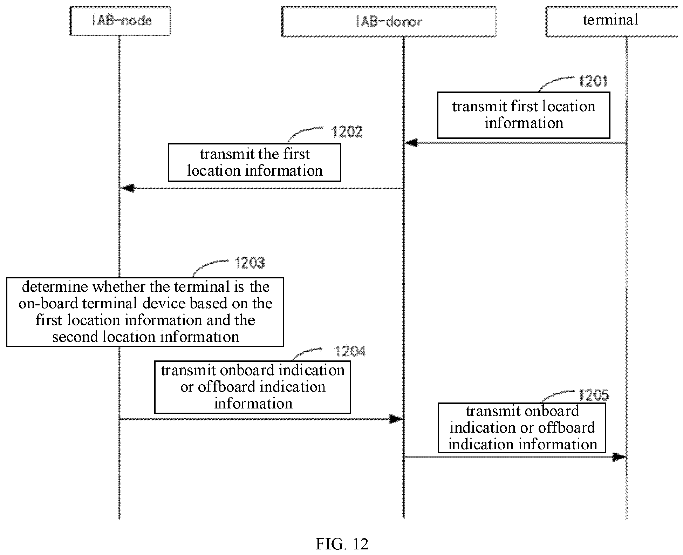

Reference is made to FIG. 12, which is a schematic diagram of interaction in another identification method for an on-board terminal provided in embodiments of the present disclosure. As shown in FIG. 11, the method may include but is not limited to the following steps.

Step 1201: a terminal transmits first location information to an IAB-donor.

Step 1202: the IAB-donor transmits the first location information to an IAB-node.

Step 1203: the IAB-node determines whether the terminal is the on-board terminal based on the first location information and the second location information.

Step 1204: the IAB-node transmits onboard indication or offboard indication information to the IAB-donor.

Step 1205: the IAB-donor transmits the onboard indication or the offboard indication information to the terminal.

For specific implementation of each of the above steps, reference may be made to the detailed description of any embodiment of the present disclosure, which will not be further described herein.

Optionally, after determining whether the terminal is the on-board terminal, the IAB-donor may send information indicating whether the terminal is the on-board terminal to a core network node. For specific implementation method thereof, reference may be made to the detailed description of any embodiment of the present disclosure, which will not be further described herein.

In the present disclosure, the terminal first sends its current first location information to the IAB-donor, and then the IAB-donor sends the first location information to the IAB-node, so that the IAB-node can determine the relative location between the terminal and the IAB-node based on the pieces of location information of the two, then determine whether the terminal is the on-board terminal based on the relative location between the two, and synchronize with the IAB-donor and the terminal to indicate the determination result to them. In this way, the IAB-donor, the IAB-node and the UE can all accurately know whether the UE is the on-board UE, thereby ensuring that the on-board terminal can preferentially access the IAB node and perform reliable, accurate and efficient cell selection, cell reselection or handover as the IAB node moves, which improves the performance of the communication system.

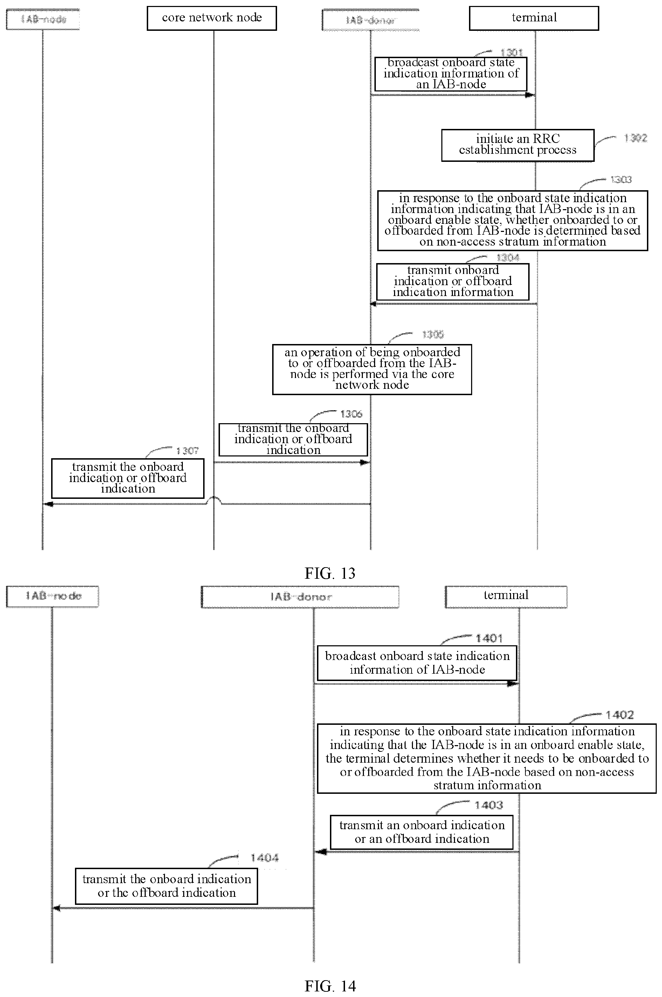

Reference is made to FIG. 13, which is a schematic diagram of interaction in another identification method for an on-board terminal provided in embodiments of the present disclosure. As shown in FIG. 13, the method may include but is not limited to the following steps.

Step 1301: a terminal receives onboard state indication information of an IAB-node broadcasted by an IAB-donor.

Step 1302: the terminal initiates an RRC establishment process.

Step 1303: in response to the onboard state indication information indicating that the IAB-node is in an onboard enable state, whether it is needed to be onboarded to or offboarded from the IAB-node is determined based on non-access stratum information.

Step 1304: onboard indication or offboard indication information is transmitted to the IAB-donor.

Step 1305: an operation of being onboarded to or offboarded from the IAB-node is performed via a core network node.

Step 1306: the core network node transmits the onboard indication or the offboard indication to the IAB-donor.

Step 1307: the IAB-donor transmits the onboard indication or the offboard indication to the IAB-node.

For specific implementation of each of the above steps, reference may be made to the detailed description of any embodiment of the present disclosure, which will not be further described herein.

In the present disclosure, after receiving the onboard state indication information of the IAB-node broadcast by the IAB-donor, the terminal first establishes an RRC connection, then determines whether it needs to be onboarded to or offboarded from the IAB-node based on the non-access stratum information, and sends the onboard indication or offboard indication information to the IAB-donor; after the operation of being onboarded to or offboarded from the IAB-node is performed, the core network node sends the onboard indication or offboard indication to the IAB-donor, and then the IAB-donor sends the onboard indication or offboard indication to the IAB-node. In this way, the IAB-donor, the IAB-node and the UE can all accurately know whether the UE is the on-board UE, thereby ensuring that the on-board terminal can preferentially access the IAB node and perform reliable, accurate and efficient cell selection, cell reselection or handover as the IAB node moves, which improves the performance of the communication system.

Reference is made to FIG. 14, which is a schematic diagram of interaction in another identification method for an on-board terminal provided in embodiments of the present disclosure. As shown in FIG. 14, the method may include but is not limited to the following steps.

Step 1401: a terminal receives onboard state indication information of an IAB-node broadcasted by an IAB-donor.

Step 1402: in response to the onboard state indication information indicating that the IAB-node is in an onboard enable state, the terminal determines whether it needs to be onboarded to or offboarded from the IAB-node based on non-access stratum information.

Step 1403: the terminal transmits an onboard indication or an offboard indication to the IAB-donor.

Step 1404: the IAB-donor transmits the onboard indication or the offboard indication to the IAB-node.

For specific implementation of each of the above steps, reference may be made to the detailed description of any embodiment of the present disclosure, which will not be further described herein.

Optionally, after determining whether the terminal is the on-board terminal, the IAB-donor may send information indicating whether the terminal is the on-board terminal to a core network node. For specific the method thereof, reference may be made to the detailed description of any embodiment of the present disclosure, which will not be further described herein.

In the present disclosure, after receiving the onboard state indication information of the IAB-node broadcast by the IAB-donor, the terminal first determines whether it needs to be onboarded to or offboarded from the IAB-node based on the non-access stratum information, and sends the onboard indication or the offboard indication to the IAB-donor, then the IAB-donor sends the onboard indication or the offboard indication to the IAB-node. In this way, the IAB-donor, the IAB-node and the UE can all accurately know whether the UE is the on-board UE, thereby ensuring that the on-board terminal can preferentially access the IAB node and perform reliable, accurate and efficient cell selection, cell reselection or handover as the IAB node moves, which improves the performance of the communication system.

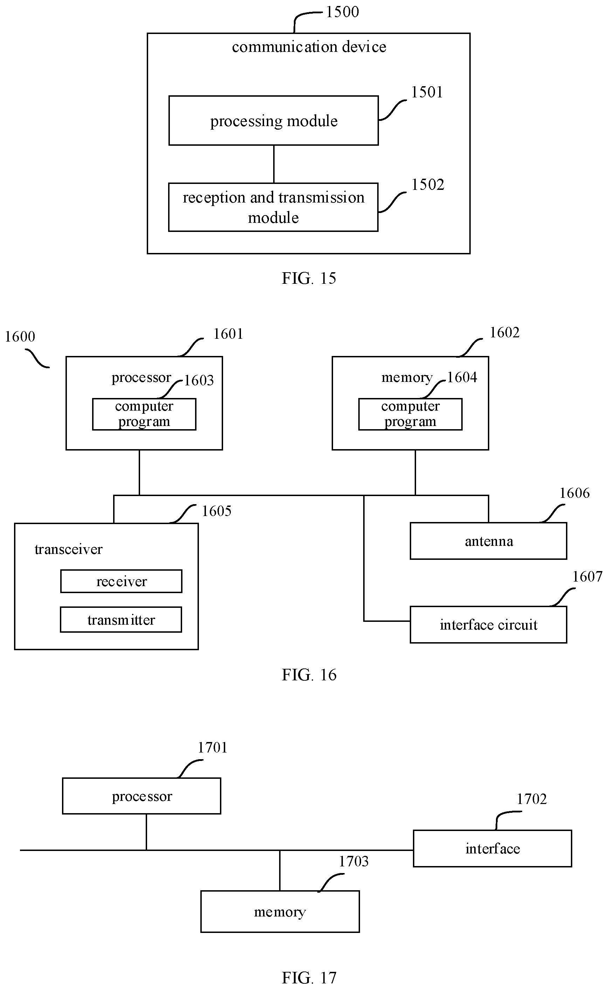

Reference is made to FIG. 15, which is a schematic structural diagram of a communication device provided in embodiments of the present disclosure. The communication device 1500 shown in FIG. 15 may include a processing module 1501 and a reception and transmission module 1502. The reception and transmission module 1502 may include a transmission module and/or a reception module. The transmission module is configured to implement a transmission function, and the reception module is used to implement a reception function. The reception and transmission module 1502 may implement a transmission function and/or a reception function.

It may be understood that, the communication device 1500 may be a terminal, an IAB-donor, or an IAB-node. Alternatively, the communication device may be a device in a terminal, or it may be a device in an IAB-donor, or it may be a device in an IAB-node. Alternatively, the communication device may be a device that may be used in conjunction with a terminal, a device that may be used in conjunction with an IAB-donor, or a device that may be used in conjunction with an IAB-node.

The processing module 1501 is configured to: determine first auxiliary information of a terminal and second auxiliary information of an integrated access and backhaul node (IAB-node); and determine whether the terminal is an on-board terminal based on the first auxiliary information and the second auxiliary information.

Optionally, the first auxiliary information is first location information, and the second auxiliary information is second location information; or the first auxiliary information is non-access stratum information, and the second auxiliary information is onboard state indication information.

Optionally, the processing module 1501 may also be configured to: determine a relative location between the terminal and the IAB-node based on the first location information and the second location information; and determine whether the terminal is the on-board terminal based on the relative location.

Optionally, the processing module 1501 may also be configured to: determine evaluation information for identifying whether the terminal is the on-board terminal; and determine whether the terminal is the on-board terminal based on the relative location information and the evaluation information.

Optionally, the evaluation information includes at least one of the following: location region range information; speed range information; location offset information for evaluation; time information for evaluation; or hysteresis information for evaluation.

Optionally, the communication device 1500 is on the terminal side: the processing module 1501 is configured to determine corresponding first location information; and the reception and transmission module 1502 is configured to receive the second location information of the IAB-node transmitted by an integrated access and backhaul donor (IAB-donor).

Optionally, the reception and transmission module 1502 is further configured to receive the evaluation information transmitted by the IAB-donor.

Optionally, the reception and transmission module 1502 is further configured to transmit first indication information to the IAB-donor; and/or transmit second indication information to the IAB-node; where each of the first indication information and the second indication information is used to indicate whether the terminal is the on-board terminal.

Optionally, the communication device 1500 is on the IAB-donor side: where the reception and transmission module 1502 is configured to receive third auxiliary information transmitted by the IAB-node for identifying whether the terminal is the on-board terminal; the processing module 1501 is configured to determine the second location information of the IAB-node based on the third auxiliary information; and the reception and transmission module 1502 is further configured to receive the first location information transmitted by the terminal.

Optionally, the third auxiliary information includes at least one of the following: an onboard enable indication; an onboard disable indication; or a second location information of the IAB-node.

Optionally, the reception and transmission module 1502 is further configured to receive the evaluation information transmitted by the IAB-node.

Optionally, the reception and transmission module 1502 is further configured to transmit third indication information to the IAB-node, where the third indication information is used to indicate to the IAB-node whether the terminal is the on-board terminal; and transmit fourth indication information to the terminal, where the third indication information is used to indicate to the terminal whether it is the on-board terminal.

Optionally, the communication device 1500 is on the IAB-node side: where the processing module 1501 is further configured to determine the second location information; and the reception and transmission module 1502 is further configured to receive the first location information transmitted by the IAB-donor, where the first location information is reported by the terminal to the IAB-donor.

Optionally, the reception and transmission module 1502 is further configured to transmit fifth indication information to the IAB-donor; and/or transmit sixth indication information to the terminal; where each of the fifth indication information and the sixth indication information is used to indicate whether the terminal is the on-board terminal.

Optionally, the communication device 1500 is on the terminal side: where the reception and transmission module 1502 is also configured to receive the onboard state indication information of the IAB-node broadcasted by an IAB-donor; the processing module 1501 is further configured to determine corresponding non-access stratum information.

Optionally, the processing module 1501 is further configured to: in response to the onboard state indication information indicating that the IAB-node is in an onboard enable state, determine via the terminal whether it is needed to be onboarded to or offboarded from the IAB-node based on the non-access stratum information.

Optionally, the reception and transmission module 1502 is further configured to transmit, to the IAB-donor and/or the IAB-node, an indication indicating that the terminal needs to be onboarded to the IAB-node or an indication indicating that the terminal needs to be offboarded from the IAB-node.

Optionally, the reception and transmission module 1502 is also configured to transmit seventh indication information to the IAB-donor, to cause the IAB-donor to select a core network node for performing an operation of being onboarded to the IAB-node or offboarded from the IAB-node based on the seventh indication information, where the seventh indication information is used to indicate whether the terminal needs to be onboarded to the IAB-node.

In the present disclosure, the communication device determines whether the terminal is the on-board terminal based on the relative location between the terminal and the IAB-node or the non-access stratum information, and synchronizes with each associated device to indicate the determination result to them. In this way, the IAB-donor, the IAB-node and the UE can all accurately know whether the UE is the on-board UE, thereby ensuring that the on-board terminal can preferentially access the IAB node and perform reliable, accurate and efficient cell selection, cell reselection or handover as the IAB node moves, which improves the performance of the communication system.

Reference is made to FIG. 16, which is a structural diagram of another communication device according to embodiments of the present disclosure. The communication device 1600 may be an IAB-donor, or may be a chip, a chip system, or a processor that supports the IAB-donor to implement the above method. Alternatively, it may be an IAB-node, or may be a chip, a chip system, or a processor that supports the IAB-node to implement the above method. Alternatively, it may be a terminal, or may be a chip, a chip system, or a processor that supports the terminal to implement the above method. The device may be configured to implement the method described in the above method embodiments. For details, reference may made to the description in the above method embodiments.

The communication device 1600 may include one or more processors 1601. The processor 1601 may be a general-purpose processor or a special-purpose processor, or the like. For example, the processor may be a baseband processor or a central processing unit. The baseband processor may be configured to process communication protocols and communication data. The central processing unit may be configured to control the communication device (such as a base station, a baseband chip, a terminal, a terminal chip, a DU or a CU, etc.), execute a computer program, and process data for the computer program.

Optionally, the communication device 1600 may further include one or more memories 1602, on which a computer program 1604 may be stored. The processor 1601 executes the computer program 1604 to cause the communication device 1600 to perform the method described in the above method embodiments. Optionally, the memory 1602 may further store data. The communication device 1600 and the memory 1602 may be arranged separately or integrated together.

Optionally, the communication device 1600 may further include a transceiver 1605 and an antenna 1606. The transceiver 1605 may be referred to as a reception and transmission unit, a transceiver unit, a reception and transmission circuit, etc., and is configured to implement reception and transmission functions. The transceiver 1605 may include a receiver and a transmitter. The receiver may be called a receiver unit or a reception circuit, etc., configured to implement the reception function; the transmitter may be referred to as a transmitter unit, a transmission circuit, etc., configured to implement the transmission function.

Optionally, the communication device 1600 may further include one or more interface circuits 1607. The interface circuit 1607 is configured to receive code instructions and transmit them to the processor 1601. The processor 1601 the code instructions to cause the communication device 1600 to perform the method described in the above method embodiments.

The transceiver 1605 in the communication device 1600 may be configured to perform the above reception and transmission steps in the drawings, and the processor 1601 may be configured to perform the above processing steps in the drawings.

In an implementation, the processor 1601 may include a transceiver for implementing reception and transmission functions. For example, the transceiver may be a reception and transmission circuit, an interface, or an interface circuit. The reception and transmission circuit, the interface or the interface circuit configured to implement the reception and transmission functions may be separated or integrated together. The above reception and transmission circuit, interface or interface circuit may be configured for reading and writing codes/data, or the above reception and transmission circuit, interface or interface circuit may be configured for signal transmission or transfer.

In an implementation, the processor 1601 may store a computer program 1603, and the computer program 1603 is executed on the processor 1601, to cause the communication device 1600 to perform the method described in the above method embodiments. The computer program 1603 may be embedded in the processor 1601, and in this case, the processor 1601 may be implemented by hardware.

In an implementation, the communication device 1600 may include a circuit, and the circuit may implement functions of reception or transmission or communication in the above method embodiments. The processor and the transceiver described in the present disclosure may be implemented on an integrated circuit (IC), an analog IC, a radio frequency integrated circuit (RFIC), a mixed signal IC, an application specific integrated circuit (ASIC), a printed circuit board (PCB), an electronic device, etc. The processor and the transceiver may be manufactured using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication device described in the above embodiments may be a network device or an intelligent relay, but the scope of the communication device described in the present disclosure is not limited thereto, and the structure of the communication device may not be limited to FIG. 16. The communication device may be a stand-alone device or may be part of a larger device. For example, the communication device may be: (1) an independent integrated circuit (IC), or chip, or chip system or subsystem; (2) a collection of one or more ICs, where, optionally, the IC collection may include a storage component for storing data and computer programs; (3) ASIC, such as modem; (4) a module that may be embedded into other devices; (5) a receiver, terminal, intelligent terminal, a cellular phone, a wireless equipment, a handheld device, a mobile unit, a vehicle-mounted device, a network device, a cloud device, an artificial intelligence device, etc.; (6) others, etc.

For a case where the communication device may be a chip or a chip system, reference may be made to FIG. 17, which is a structural diagram of a chip. The chip shown in FIG. 17 includes a processor 1701 and an interface 1702. The quantity of processors 1701 may be one or more, and the quantity of interfaces 1702 may be multiple.

For a case where the chip is configured to implement the functions of the terminal in the embodiments of the present disclosure, optionally, the chip further includes a memory 1703, and the memory 1703 is configured to store needed computer programs and data.

Those skilled in the art can also understand that various illustrative logical blocks and steps listed in the embodiments of the present disclosure may be implemented by electronic hardware, computer software, or a combination of both. Whether such functions are implemented in hardware or software depends on the specific application and the overall system design requirement. Those skilled in the art can use various methods to implement the described functions for each specific application, but such implementation should not be understood as exceeding the protection scope of the embodiments of the present disclosure.

The present disclosure further provides a readable storage medium, on which instructions are stored. When the instructions are executed by a computer, functions of any of the above method embodiments are implemented.

The present disclosure further provides a computer program product. The computer program product is executed by a computer to implement functions of any of the above method embodiments.

The above embodiments may be implemented in whole or in part by software, hardware, firmware, or any combination thereof. When implemented using software, it may be implemented in whole or in part in the form of a computer program product. The computer program product includes one or more computer programs. When the computer program is loaded and executed on a computer, the processes or functions described in the embodiments of the present disclosure are generated in whole or in part. The computer may be a general-purpose computer, a special-purpose computer, a computer network, or other programmable device. The computer program may be stored in a computer-readable storage medium or transferred from a computer-readable storage medium to another computer-readable storage medium. For example, the computer program may be transferred from a website, computer, server, or data center to another website, computer, server or data center through wired means (such as coaxial cable, optical fiber, digital subscriber line (DSL)) or wireless means (such as infrared, radio, microwave, etc.). The computer-readable storage medium may be any available medium that may be accessed by a computer, or a data storage device integrated by one or more available media, which includes a server, a data center, and so on. The available medium may be a magnetic medium (e.g., floppy disk, hard disk, magnetic tape), optical medium (e.g., high-density digital video disc (DVD)), or semiconductor medium (e.g., solid state disk (SSD)) etc.

Those of ordinary skill in the art may appreciate that the first, second, and other numerical numbers involved in the present disclosure are only for convenience of description and are not used to limit the scope of the embodiments of the present disclosure, or to indicate the order.

At least one in the present disclosure may also be described as one or more, and multiple may be two, three, four or more, which are not limited by the present disclosure. In the embodiments of the present disclosure, technical features are distinguished by terms "first", "second", "third", "A", "B", "C" and "D", etc. The technical features described by the terms "first", "second", "third", "A", "B", "C" and "D" are not in an order of precedence or in an order of size.

The corresponding relationships shown in each table in the present disclosure may be configured or predefined. The values of the information in each table are only examples and may be configured as other values, which is not limited by the present disclosure. When the correspondence between information and each parameter is configured, it is not necessarily required to configure all the correspondences shown in each table. For example, in the table in the present disclosure, the correspondences shown in some rows may not be configured. For another example, appropriate form adjustments may be made based on the above table, such as splitting, merging, etc. The names of the parameters shown in the titles of the above tables may also be other names understandable by the communication device, and the values or expressions of the parameters may also be other values or expressions understandable by the communication device. When implementing the above tables, other data structures can also be used, such as array, queue, container, stack, linear list, pointer, linked list, tree, graph, structure, class, heap, distributed table or hash table.

The term "predefined" in the present disclosure may be understood as defined, pre-defined, stored, pre-stored, pre-negotiated, pre-configured, solidified, or pre-burnt.

Those of ordinary skill in the art will appreciate that the units and algorithm steps of each example described in conjunction with the embodiments disclosed herein may be implemented with electronic hardware, or a combination of computer software and electronic hardware. Whether these functions are performed in hardware or software depends on the specific application and design constraints of the technical solutions. Those of ordinary skill in the art may implement the described functions using different methods for each specific application, but such implementations should not be considered as exceeding the scope of the present disclosure.

Those of ordinary skill in the art can clearly understand that for the convenience and simplicity of description, reference may be made to the corresponding processes in the above method embodiments for the specific operating processes of the systems, devices and units described above, which will not be further described herein.

The above descriptions are only specific embodiments of the present disclosure, but the protection scope of the present disclosure is not limited thereto. Any technician familiar with the technical field can easily think of changes or substitutions within the technical scope of in the present disclosure, all of which shall fall within the protection scope of the present disclosure. Therefore, the protection scope of the present disclosure is defined by the protection scope of the claims.

## Claims

1. An identification method for an on-board terminal, comprising:
determining first auxiliary information of a terminal and second auxiliary information of an integrated access and backhaul node (IAB-node); and
determining whether the terminal is the on-board terminal based on the first auxiliary information and the second auxiliary information.

2. The method according to claim **1,** wherein:
the first auxiliary information is first location information, and the second auxiliary information is second location information; or
the first auxiliary information is non-access stratum information, and the second auxiliary information is onboard state indication information.

3. The method according to claim 2, wherein the determining whether the terminal is the on-board terminal based on the first auxiliary information and the second auxiliary information comprises:
determining a relative location between the terminal and the IAB-node based on the first location information and the second location information; and
determining whether the terminal is the on-board terminal based on the relative location.

4. The method according to claim 3, wherein the determining whether the terminal is the on-board terminal based on the relative location comprises:
determining evaluation information for identifying whether the terminal is the on-board terminal; and
determining whether the terminal is the on-board terminal based on the relative location information and the evaluation information.

5. The method according to claim 4, wherein the evaluation information comprises at least one of:
location region range information;
speed range information;
location offset information for evaluation;
time information for evaluation; or
hysteresis information for evaluation.

6. The method according to any one of claims 3 to 5, wherein the determining the first auxiliary information of the terminal and the second auxiliary information of the IAB-node comprises:
determining, by the terminal, its corresponding first location information; and
receiving, by the terminal, the second location information of the IAB-node transmitted by an integrated access and backhaul donor (IAB-donor).

7. The method according to claim 6, further comprising:
receiving, by the terminal, the evaluation information transmitted by the IAB-donor.

8. The method according to claim 6, further comprising:
transmitting, by the terminal, first indication information to the IAB-donor; and/or
transmitting, by the terminal, second indication information to the IAB-node;
wherein each of the first indication information and the second indication information is used to indicate whether the terminal is the on-board terminal.

9. The method according to any one of claims 3 to 5, wherein the determining the first auxiliary information of the terminal and the second auxiliary information of the IAB-node comprises:
receiving, by an IAB-donor, third auxiliary information transmitted by the IAB-node for identifying whether the terminal is the on-board terminal;
determining, by the IAB-donor, the second location information of the IAB-node based on the third auxiliary information; and
receiving, by the IAB-donor, the first location information transmitted by the terminal.

10. The method according to claim 9, wherein the third auxiliary information comprises at least one of:
an onboard enable indication;
an onboard disable indication; or
the second location information of the IAB-node.

11. The method according to claim 9, further comprising:
receiving, by the IAB-donor, the evaluation information transmitted by the IAB-node.

12. The method according to any one of claims 9 to 11, further comprising:
transmitting, by the IAB-donor, third indication information to the IAB-node, wherein the third indication information is used to indicate to the IAB-node whether the terminal is the on-board terminal; and
transmitting, by the IAB-donor, fourth indication information to the terminal, wherein the third indication information is used to indicate to the terminal whether it is the on-board terminal.

13. The method according to any one of claims 3 to 5, wherein the determining the first auxiliary information of the terminal and the second auxiliary information of the IAB-node comprises:
determining, by the IAB-node, the second location information; and
receiving, by the IAB-node, the first location information transmitted by the IAB-donor, wherein the first location information is reported by the terminal to the IAB-donor.

14. The method according to claim 13, further comprising:
transmitting, by the IAB-node, fifth indication information to the IAB-donor; and/or
transmitting, by the IAB-node, sixth indication information to the terminal;
wherein each of the fifth indication information and the sixth indication information is used to indicate whether the terminal is the on-board terminal.

15. The method according to claim 2, wherein the determining the first auxiliary information of the terminal and the second auxiliary information of the IAB-node comprises:
receiving, by the terminal, the onboard state indication information of the IAB-node broadcasted by an IAB-donor; and
determining, by the terminal, its non-access stratum information.

16. The method according to claim 15, wherein the determining whether the terminal is the on-board terminal based on the first auxiliary information and the second auxiliary information comprises:
in response to the onboard state indication information indicating that the IAB-node is in an onboard enable state, determining by the terminal whether it is needed to be onboarded to or offboarded from the IAB-node based on the non-access stratum information.

17. The method according to claim 16, wherein the determining whether it is needed to be onboarded to or offboarded from the IAB-node based on the non-access stratum information comprises:
transmitting, to the IAB-donor and/or the IAB-node, an indication indicating that the terminal needs to be onboarded to the IAB-node or an indication indicating that the terminal needs to be offboarded from the IAB-node.

18. The method according to claim 16 or claim 17, further comprising:
transmitting seventh indication information to the IAB-donor, to cause the IAB-donor to select a core network node for performing an operation of being onboarded to the IAB-node or offboarded from the IAB-node based on the seventh indication information, wherein the seventh indication information is used to indicate whether the terminal needs to be onboarded to the IAB-node.

19. A communication device, comprising:
a processing module, configured to determine first auxiliary information of a terminal and second auxiliary information of an integrated access and backhaul node (IAB-node);
wherein the processing module is further configured to determine whether the terminal is an on-board terminal based on the first auxiliary information and the second auxiliary information.

20. A communication system, comprising a terminal, an IAB-donor and an IAB-node, wherein each of the terminal, the IAB-donor and the IAB-node is configured to perform the identification method according to any one of claims 1 to 18.

21. A communication device, comprising a processor and a memory, wherein the memory is configured to store a computer program, and the processor is configured to execute the computer program stored in the memory to cause the communication device to perform the identification method according to any one of claims 1 to 18.

22. A computer-readable storage medium, configured to store instructions that, when executed, cause the identification method according to any one of claims 1 to 18 to be performed.
